# FASCICULE DE BREVET EUROPEEN

(11) **EP 1 208 898 B1**
(45) Date de publication et mention de la délivrance du brevet: **09.02.2011**
(21) Numéro de dépôt: 01402837.7
(22) Date de dépôt: 02.11.2001
(51) Int. Cl.: B01D 17/05, C10G 33/04, E21B 37/06, E21B 43/22, E21B 43/27, E21B 43/25

(54) **Formulation désémulsionnante organique et son utilisation dans le traitement des puits forés en boue à l'huile**
Demulgierende organische Zusammensetzung und ihre Verwendung in der Behandlung mit Öl enthaltendem Bohrschlamm gebohrter Ölbohrlöcher
Demulsifying organic formulation and use thereof in the treatment of wells drilled with oil mud

(30) Priorité: 24.11.2000 FR 0015198
(43) Date de publication de la demande: 29.05.2002
(73) Titulaire: Institut Français du Pétrole, 92852 Rueil-Malmaison Cedex (FR)
(72) Inventeur: Giard-Blanchard, Claire, 75009 Paris (FR); Audibert-Hayet, Annie, 78290 Croissy sur Seine (FR); Dalmazzone, Christine, 78000 Versailles (FR)

(56) Documents cités:
- EP-A- 0 492 857
- EP-A- 1 053 781
- WO-A-97/12947
- WO-A-99/66006
- DE-A- 19 708 499
- FR-A- 2 768 637
- FR-A- 2 768 732
- GB-A- 839 112
- US-A- 2 167 347
- US-A- 2 167 349
- US-A- 2 290 414
- US-A- 2 505 374
- US-A- 4 140 640
- PATENT ABSTRACTS OF JAPAN vol. 013, no. 072 (C-570), 17 février 1989 (1989-02-17) & JP 63 264690 A (SANYO CHEM IND LTD), 1 novembre 1988 (1988-11-01)

## Description

### Arrière-plan-technologique

### Domaine de l'invention

L'invention concerne le traitement des puits forés en boue à l'huile. Elle concerne plus particulièrement une formulation désémulsionnante, utilisable dans le traitement des puits forés en boue à l'huile, de préférence non éco-toxique et compatible au mieux avec les fluides de formation, qui comprend au moins un constituant choisi parmi les compositions amphiphiles non-ioniques obtenues par réaction d'au moins une huile végétale polymérisée sur au moins un aminoalcool et les esters alkyliques (par exemple de C1 à C8) d'acides gras dérivés d'huiles naturelles, végétales ou animales ; éventuellement au moins un agent mouillant choisi parmi les tensioactifs anioniques ; et éventuellement au moins un solvant (ou diluant) ; ladite formulation désémulsionnante étant employée en base organique afin de limiter au maximum les phénomènes de formation d'émulsions in situ et de re-saturation en phase aqueuse des abords du puits. L'invention concerne également des formulations du même type alourdies par des charges minérales.

Une formation pétrolière est endommagée lorsqu'un puits se montre moins productif que ne le prévoyaient les analyses des tests de puits. Les mécanismes d'endommagement de la formation dépendent du type de réactions produites entre le fluide de puits, les fluides de la formation et la roche, dans les conditions de travail (pression et température de la couche et de la boue). L'altération de la formation productrice proche du puits est due aux interactions néfastes entre les fluides de formation et les fluides étrangers introduits. Si les fluides de puits s'avèrent responsables de l'endommagement, un traitement chimique est alors nécessaire pour restaurer les caractéristiques du réservoir. Il doit permettre de détruire le cake externe et/ou interne et de nettoyer la zone endommagée aux abords du puits. Ce traitement peut être ou non associé à un traitement matriciel de type acide.

En règle générale, les fluides de puits à base d'huile génèrent peu de filtrat, possèdent de bonnes propriétés rhéologiques et forment un cake mince et perméable. En revanche, ils contiennent des additifs chimiques (tensioactifs) chargés d'émulsionner l'eau sous forme de gouttelettes au sein de la phase continue à base d'huile et de rendre mouillables à l'huile les particules solides utilisées comme alourdissant ou viscosifiant. Ces tensioactifs en large excès de concentration dans le fluide pour maintenir la stabilité de l'émulsion inverse peuvent pénétrer dans la formation avec le filtrat.

Trois types d'endommagement sont particulièrement envisageables dans le cas des fluides à base d'huile :
- la formation d'une émulsion au sein du réservoir, résultant des interactions entre le filtrat de la boue à l'huile (qui contient principalement de l'huile et des tensioactifs) et les fluides de réservoir (saumure et huile). Les émulsifiants introduits en excès dans la formulation peuvent entrer en contact avec la formation. Or, un important cisaillement à la constriction des pores en présence d'émulsifiant peut conduire à la formation d'une émulsion très stable et très visqueuse entraînant une réduction de la mobilité effective des hydrocarbures présents ;
- une altération de la mouillabilité initiale de la roche réservoir. Les produits de type émulsifiant transforment généralement la roche initialement mouillable à l'eau en un état de mouillabilité intermédiaire, voire mouillable à l'huile, ce qui peut entraîner une modification de la perméabilité relative à l'huile et donc diminuer la mobilité de l'huile ; et
- le dépôt de fines particules mobiles dans les pores (réduction de la perméabilité absolue).

La composition chimique du cake de filtration doit être considérée attentivement lors de la conception des fluides de traitement. Le cake est principalement constitué de gouttelettes d'eau émulsionnées, qui agissent en tant que particules colloïdales et se combinent avec les particules solides en suspension dans le fluide pour former un cake. La stabilité de l'émulsion, le type et la nature des solides influencent à la fois les pertes de fluide et les propriétés de filtration du cake. Le choix du produit de traitement doit prendre en compte les paramètres nécessaires pour réaliser le lavage du cake et le lessivage de la formation.

Le traitement envisagé concerne :
- la dissolution ou la dispersion des agents alourdissants présents dans le cake ;
- et l'attaque des additifs contenus dans le filtrat.

Le traitement doit donc être adapté au type de boue utilisé. Les principaux paramètres à considérer sont :
- le type d'endommagement et son étendue ;
- les caractéristiques du réservoir (porosité et perméabilité) ;
- le type de la formation (nature des roches et solubilité à l'acide) ;
- les contaminants possibles (eau, boues - boue à l'eau et boue à l'huile -, ciments, bactéries) ;
- la compatibilité du fluide de traitement avec les contaminants ;
- la pression de fond et la température ;
- le temps de traitement ; et
- les limitations physiques des équipements du puits.

### Description de l'art antérieur

L'amélioration du design d'un fluide de forage visant à réduire l'endommagement peut être complètement ruinée par l'utilisation d'une procédure et/ou d'un produit de nettoyage inadaptés. Les solutions de traitement des cakes de boues à l'huile proposées actuellement sont sous forme aqueuse et génèrent un endommagement additionnel considérable, voire entraînent un colmatage du puits. De nombreux exemples de traitement des puits à l'aide de surfactants utilisés en phase aqueuse peuvent être trouvés dans la littérature (brevets US-A-4 681 165, 4 595 511, 4 681 164 et 5 110 487). L'utilisation de surfactants en base huile pour le cassage d'émulsions a été rapportée (brevets US-A-5 614 101, 5 256 305 et 4 416 754), mais l'objectif n'était pas l'application à la mise en production pétrolière.

### Résumé de l'invention

La présente invention a pour objet une formulation désémulsionnante utilisée en base organique (de préférence dans une base organique non-polluante et qui peut être l'huile de la boue elle-même), ladite formulation désémulsionnante étant capable de casser une émulsion eau-dans-huile. L'invention a également pour objet l'utilisation d'une formulation désémulsionnante en base organique dans le traitement des puits forés en boue à l'huile. La simplification de la solution de traitement permet de limiter les effets de re-saturation en phase aqueuse aux abords du puits et la formation d'émulsions *in situ*. L'invention a également pour objet des formulations alourdies par des charges minérales.

### Description Sommaire des Dessins

Les Figures 1 à 8 et 10 représentent des diagrammes de détermination de la déstructuration en cristallisoir des cakes traités au moyen des Formulations 1 à 5 décrites dans les exemples, suivie par la technique de DSC ("Differential Scanning Calorimetry"), pour différents temps de contact.

La Figure 9 représente, dans un test de filtration statique, le diagramme de variation du volume V en ml en fonction de la racine carrée du temps en minutes (Rₜ) pour un produit commercial et pour la Formulation 4 décrite dans les exemples.

La Figure 11 représente le diagramme de variation du volume filtré en fonction du temps, dans un test de filtration statique sur roche réalisé avec les Formulations 4 et 5 décrites dans les exemples.

Les Figures 12 et 13 sont des photographies réalisées par cryomicroscopie électronique à balayage montrant la déstructuration d'un cake par des formulations (alourdies et non-alourdies) de l'invention.

### Description détaillée de l'invention

Les formulations désémulsionnantes en base organique de l'invention sont caractérisées en ce qu'elles comprennent au moins un constituant (désigné dans la suite de la description par "agent désémulsionnant" ou "casseur d'émulsion"), éventuellement associé à un agent mouillant choisi parmi les tensioactifs anioniques et à au moins un solvant (ou diluant), l'ensemble étant en mélange dans une base organique, ledit agent désémulsionnant comprenant au moins un composé amphiphile non-ionique obtenu par réaction d'au moins une huile végétale polymérisée sur au moins un aminoalcool et/ou au moins un mélange d'esters alkyliques (par exemple de C1 à C8) d'acides gras dérivés d'huiles naturelles, végétales ou animales.

Plus particulièrement dans les formulations de l'invention, ledit agent désémulsionnant est présent en une proportion de 0,5 à 100 % en poids de matière active pure ; ledit agent mouillant en une proportion allant jusqu'à 50 % en poids de matière active pure ; et ledit solvant (ou diluant) en une proportion allant jusqu'à 99,5 % en poids ; l'ensemble ayant une concentration en matières actives pures de 0,01 à 50 g, de préférence de 0,1 à 10 g, pour 100 ml de ladite base organique.

L'agent désémulsionnant (ou "casseur d'émulsion") peut consister d'une part en au moins une composition amphiphile non-ionique obtenue par réaction d'au moins une huile végétale polymérisée sur au moins un aminoalcool. De telles compositions ont été décrites dans le brevet français FR-B-2 768 732 au nom du même déposant.

Dans la préparation de telles compositions, toutes les huiles végétales peuvent convenir. On utilisera de préférence des huiles fortement insaturées telles que l'huile de lin, l'huile de carthame, l'huile de pépins de raisins, l'huile de bois de Chine, l'huile de tournesol et leurs mélanges. L'huile de lin est préférée. Ces huiles végétales sont utilisées sous forme polymérisée.

Les huiles végétales polymérisées (couramment dénommées "stand oils") sont obtenues par traitement thermique des huiles végétales fortement insaturées citées plus haut, dans des conditions telles qu'il n'y a pas d'oxydation. L'huile de lin (de préférence raffinée) est généralement utilisée, mais il est possible d'employer l'huile de carthame, l'huile de pépins de raisins, l'huile de bois de Chine, l'huile de tournesol ou leurs mélanges. Les huiles végétales polymérisées peuvent présenter après polymérisation une viscosité à 20 °C comprise entre 5 et 60 Pa.s. A titre d'exemple, le traitement thermique d'une huile de lin raffinée à une température de 290-300 °C donne en 6 à 12 heures un produit d'une viscosité de 10 Pa.s à 25 °C.

Les aminoalcools utilisés pour préparer les compositions amphiphiles pouvant entrer dans la composition des formulations de l'invention sont en général des amines ou polyamines comportant une ou plusieurs fonctions alcools et éventuellement une ou plusieurs fonctions éthers.

Par exemple, les aminoalcools peuvent correspondre aux formules suivantes :

HO-CₘH₂ₘ-NH₂

HO-CₘH₂ₘ-NH-CₖH₍₂ₖ₊₁₎

(HO-CₘH₂ₘ-)₂-NH

(HO-CₘH₂ₘ-)ₚ CH₍₃₋ₚ₎-NH₂

avec m = 2 à 6;k = 1 à 6;p = 2 ou 3.

En particulier, on peut citer:
la monoéthanolamine : OH-(CH₂)₂-NH₂,
la monopropanolamine : OH-(CH₂)₃-NH₂,
la monoisopropanolamine : CH₃-CH(OH)-CH₂-NH₂,
le 2-amino-1-butanol : CH₃-CH₂-CH(NH₂)-CH₂-OH,
le 1-amino-2-butanol : CH₃-CH₂-CH(OH)- CH₂-NH₂,
la N-méthyl-éthanolamine : CH₃-NH-(CH₂)₂-OH,
la N-butyl-éthanolamine : CH₃-(CH₂)₃-NH-(CH₂)₂-OH,
la pentanolamine, l'hexanolamine, la cyclohexanolamine, les polyalcanolamines ou encore les polyalcoxyglycolamines, de formule :

   OH-(CH₂-CH₂-O-)ₙCH₂-CH₂-NH₂ (n entre 1 et 30)

   et les polyols aminés tels que :
   la diéthanolamine : (OH -CH₂-CH₂-)₂ NH,
   la diisopropanolamine : (CH₃-CH(OH)-CH₂)₂-NH, ou
   le trihydroxyméthylaminométhane : ((HO)H₂C-)₃C-NH₂.

La synthèse des composés de l'invention peut être effectuée par réaction d'un excès d'aminoalcool, de préférence la diéthanolamine, sur une huile végétale polymérisée, de préférence l'huile de lin polymérisée. De préférence, la réaction est conduite en l'absence de solvant et généralement à une température supérieure à environ 100°C, et de préférence comprise entre 100 et 200 °C. Cependant, si la viscosité du milieu réactionnel est trop élevée, la réaction pourra se faire en présence d'un solvant.

L'agent désémulsionnant (ou "casseur d'émulsion") peut consister d'autre part en au moins un mélange d'esters alkyliques (par exemple de C1 à C8) d'acides gras dérivés d'huiles naturelles, végétales ou animales. Dans ce cas, toutes les huiles peuvent également convenir, mais on donnera la préférence à l'huile de colza, dont on utilise de préférence les esters méthyliques.

L'agent désémulsionnant peut, bien entendu, être constitué de proportions variées
- (a) d'au moins une composition amphiphile non-ionique obtenue par réaction d'au moins une huile végétale polymérisée sur au moins un aminoalcool ; et
- (b) d'au moins un mélange d'esters alkyliques d'acides gras dérivés d'une huile naturelle, par exemple d'origine végétale.

L'agent mouillant, éventuellement présent dans les formulations à base organique de l'invention et choisi plus particulièrement parmi les tensioactifs anioniques, peut être plus particulièrement un dialkyl sulfosuccinate de sodium, par exemple le dioctyl sulfosuccinate de sodium.

Le solvant (ou diluant) éventuellement présent dans les formulations de l'invention peut être une base organique quelconque. Il peut être choisi plus particulièrement parmi les coupes pétrolières (telles que les kérosènes), les alcools et les mélanges hydroalcooliques. Il peut également être choisi parmi les esters alkyliques d'acides carboxyliques à longues chaînes, tels que les esters de 2-éthylhexyle d'une coupe d'acides carboxyliques de 8 à 10 atomes de carbone, qui seront désignés dans la suite par 2-éthylhexylC8C10. Il peut encore être choisi parmi les dérivés végétaux tels que les compositions d'esters alkyliques (par exemple de C1 à C8) d'acides gras dérivés d'huiles végétales, par exemple les esters méthyliques de l'huile de colza. Dans les formulations désémulsionnantes de l'invention, les compositions d'esters alkyliques (par exemple de C1 à C8) d'acides gras dérivés d'huiles végétales peuvent donc jouer le rôle de constituant désémulsionnant proprement dit ou de solvant (ou diluant).

La proportion de solvant (ou diluant) dans les formulations de l'invention est de préférence comprise entre 20 et 40 % en poids.

La base dans laquelle est utilisée la composition définie ci-dessus est en général une huile minérale ou une huile d'origine végétale, de préférence non-polluante. Comme exemples d'huiles d'origine végétale, on peut citer les mélanges d'esters alkyliques (par exemple de C1 à C8) d'huiles végétales, tels que les mélanges d'esters méthyliques de l'huile de colza.

La base organique utilisée peut être une huile identique à celle de la boue. Dans ce cas, on peut utiliser par exemple une huile minérale, comme l'huile HDF 2000® ou l'huile EDC 95® (vendues par la société Total Solvant), ou encore une huile végétale, comme l'huile BDMF® (mélange d'esters méthyliques d'huile de colza vendu par la société Oléon).

Dans une variante, la base organique telle que définie ci-dessus peut elle-même servir de solvant (ou diluant) aux constituants (désémulsionnant et/ou agent mouillant) des formulations de l'invention.

L'invention concerne également l'utilisation des formulations désémulsionnantes décrites ci-dessus pour le traitement des puits forés en boue à l'huile.

Dans cette application, les formulations de traitement selon l'invention sont choisies corrélativement à la formulation de boue de façon à être compatible avec les systèmes émulsifiants et agents mouillants généralement utilisés pour disperser les solides dans la boue. Les formulations désémulsionnantes selon l'invention répondent à des critères de sélection qui peuvent être vérifiés en mettant en oeuvre les déterminations suivantes :
- caractérisation de l'action de déstructuration du cake : en cristallisoir et en cellule de filtration statique par la technique de "Differential Scanning Calorimetry" (DSC) et la cryomicroscopie ;
- compatibilité des fluides de formation (huile et saumure), de traitement (formulation désémulsionnante en base huile) et de forage (filtrat de la boue de forage à base huile) : étude de la formation des émulsions *in situ*.

L'aptitude d'une formulation désémulsionnante à être utilisée selon l'invention est principalement vérifiée par la technique de DSC. Cette technique est décrite en détail dans "Utilisation de la DSC pour la caractérisation de la stabilité des émulsions eau dans pétrole" (C. Dalmazzone, H. Séris - Revue de l'Institut Français du Pétrole, vol. 53, n°4, 1998). La technique est mise en oeuvre sur des échantillons de cake avant et après traitement pour évaluer le cassage de l'émulsion au sein du cake.

La technique thermique DSC est généralement utilisée pour déterminer la composition des émulsions eau-dans-huile, car elle permet de distinguer l'eau libre de l'eau émulsifiée (l'eau libre cristallise à des températures beaucoup plus élevées que les gouttelettes d'eau en émulsion). Cette technique est fondée sur les propriétés de solidification et de fusion des gouttelettes et du milieu dans lequel elles sont dispersées. Les informations obtenues concernent :
- le type d'émulsion : simple (eau-dans-huile ou huile-dans-eau) ou multiple (eau-dans-huile-dans-eau ou huile-dans-eau-dans-huile) ;
- la quantité de liquide et son état : liée ou dispersée ou libre ;
- les compositions des phases libres et dispersées ;
- le diamètre moyen des gouttelettes et leur évolution en fonction du temps due à la coalescence ou au mûrissement d'Ostwald ; et
- les transferts de matière entre gouttelettes dus à leur différence de composition.

Les conditions à remplir pour le système désémulsionnant sont :
- la compatibilité du filtrat de boue à l'huile, des fluides de réservoir et du fluide de traitement. On fait varier la proportion de chaque phase pour pouvoir déterminer la formation d'émulsions sous forme de diagramme ternaire. La formation d'émulsion est caractérisée par des tests de type « Bottle Test ».
- la déstructuration des cakes obtenus en tests API par cassage de l'émulsion. La déstructuration des cakes est évaluée par l'analyse des courbes de DSC et par cryomicroscopie.

La présente invention concerne également un fluide de descente des "gravel packs" (en anglais "gravel pack carrier fluid"). Il a en effet été mis en évidence récemment par H.K.L. Ladva et al (SPE 68959 SPE "Formation Damage" mai 2001) qu'il était possible de simultanément traiter le cake de filtration et descendre les équipements de "gravel pack" dans le puits. L'objectif est d'avoir un fluide parfaitement compatible avec la formulation de boue utilisée pour forer le réservoir, mais aussi compatible avec les fluides de réservoir (saumure/huile), de façon à éviter le risque de formation d'une émulsion, qui colmaterait le réservoir. Le traitement doit pouvoir être effectif dans un laps de temps tel qu'il permet la descente des équipements, mais sans que le puits ne parte en perte par une rapide destruction du cake de filtration.

Ainsi, dans cette variante de l'invention, le fluide peut contenir en outre de 1 à 10 % en poids par rapport à la base organique d'au moins un agent viscosifiant pour milieu organique et une quantité, déterminée selon la masse volumique requise pour le fluide, d'au moins un agent alourdissant.

L'agent viscosifiant peut être choisi parmi les résines acryliques organosolubles, plus ou moins réticulées. On citera par exemple la Pliolite DF 01®, commercialisée par la société Goodyear Speciality Chemical,

L'agent alourdissant peut être choisi parmi les carbonates de calcium de différentes granulométries. On peut citer les produits Mikhart®, distribués par BAROID, qui consistent en des carbonates de calcium, par exemple les Mikhart 5® et Mikhart 40®, dont la granulométrie correspond à des D 50 de 5 µM et de 40 µm, respectivement.

On peut encore ajouter jusqu'à 5 %, et de préférence jusqu'à 2 % en poids par rapport à la base organique d'au moins un agent dispersant. Celui-ci peut être choisi parmi les esters d'acides carboxyliques hydroxy fonctionnalisés, dont les groupes fonctionnels ont des affinités avec les pigments utilisés pour la formulation des peintures. On peut citer par exemple le Disperbyk-108®, fabriqué et commercialisé par la société BYK-Chemie GmbH.

Cette variante de l'invention peut concerner, d'une manière générale, toute phase de puits nécessitant un fluide de même densité que la boue utilisée pour forer le puits.

### Exemples

Les exemples suivants illustrent l'invention sans en limiter la portée.

Dans une première série d'exemples, on a utilisé quatre formulations selon l'invention.

**Formulation 1 :** esters méthyliques d'huile de colza purs.

**Formulation 2 :** composition amphiphile non-ionique obtenue par réaction d'huile de lin polymérisée sur de la diéthanolamine, à 50 % en poids dans un mélange d'esters méthyliques d'huile de colza.

**Formulation 3 :** composition amphiphile non-ionique obtenue par réaction d'huile de lin polymérisée sur de la diéthanolamine, à 50 % en poids dans un mélange à poids égal de mélange d'esters méthyliques de colza et de 2-éthylhexylC8C10. Cette formulation contient donc 50 % en poids de désémulsionnant pur et, en tout, 50 % en poids de solvants. Elle est utilisée en solution dans du 2-éthylhexylC8C10 à une concentration de 10 g/l.

**Formulation 4 :** La formulation a la composition suivante :
- désémulsionnant : 5 % en poids de composition amphiphile non-ionique obtenue par réaction d'huile de lin polymérisée sur de la diéthanolamine,
- agent mouillant: 25 % en poids d'Aérosol OTS® (70 % en poids de dioctyl sulfosuccinate de sodium dans une coupe pétrolière) et 20 % en poids de Celanol DOS® (65 % en poids de dioctyl sulfosuccinate de sodium dans un mélange hydroalcoolique) ; et
- diluant : 50 % en poids de Ketrul 210 (coupe kérosène désodorisée).

Cette formulation contient donc 5 % en poids de désémulsionnant pur, 30,5 % en poids d'agent mouillant pur et, en tout, 64,5 % en poids de solvants. Elle est utilisée en solution dans l'huile à une concentration de 10 g/l, l'ensemble étant en solution à 1 g/100 ml dans une huile minérale HDF 2000® (huile de la boue), de masse volumique 0,81.

### Tests sur les formulations 1 à 4

Trois types de tests peuvent être mis en oeuvre pour évaluer l'efficacité du traitement sur la déstructuration des cakes de boue à l'huile : test de déstructuration en cristallisoir, test de filtration statique en cellule et test de compatibilité entre les fluides de réservoir, les fluides de formation et le fluide de traitement.

### Test de déstructuration des cakes en cristallisoir

Les aspects cinétiques de la déstructuration des cakes ont été étudiés sur une formulation commerciale de boue à base d'huile.

Principe : La boue à base d'huile est filtrée sur papier filtre en cellule de filtration statique selon la procédure API à une température de 80 °C et sous une différence de pression de 3,5 MPa pendant une heure. Des morceaux du cake obtenu sont placés dans des cristallisoirs en contact avec 20 ml de solution de traitement pendant des temps variables à température ambiante. Le cassage de l'émulsion au sein du cake est évalué grâce à la technique de DSC.

Des morceaux du papier filtre supportant le cake sont découpés au scalpel. La masse des échantillons est d'environ 10 mg, pesés précisément. L'échantillon est placé à l'aide de pinces dans une capsule en aluminium. Un soin particulier est pris lors de la manipulation de l'échantillon (découpage avec le papier filtre, introduction dans la capsule) pour éviter d'endommager le cake mécaniquement.

La cellule est ensuite introduite dans le four de l'appareil de DSC aux côtés d'une cellule vide de référence. La cellule subit alors un cycle de refroidissement - chauffage de 20 °C à -120 °C. On enregistre le flux de chaleur Q (en W/g) en fonction de la température T (en °C). Un étalonnage est réalisé au préalable avec une cellule contenant de la saumure à la même concentration en CaCl₂ que la boue. La présence d'eau dans l'échantillon est détectée par les pics de cristallisation de la saumure.

Qualitativement, la température correspondant aux pics permet d'évaluer l'état de l'eau dans l'échantillon, l'eau libre cristallisant à des températures plus élevées que l'eau émulsionnée. D'autre part, la forme du pic permet de statuer sur le caractère polydisperse (pic irrégulier ou présentant un épaulement) ou monodisperse (pic régulier et effilé) de l'émulsion au sein du cake, ce qui donne une information sur sa stabilité.

D'un point de vue quantitatif, la position des pics permet d'évaluer la finesse de l'émulsion (les gouttelettes ont un diamètre d'autant plus faible que la température de cristallisation est basse). De plus, la taille des pics permet d'accéder à la masse d'eau présente dans l'échantillon.

**Tableau 1 : Système boue utilisé**

| | Formulation BAROID 80-20® |
|---|---|
| Huile de base | Huile minérale HDF 2000® |
| Saumure | Eau à 24 % en poids de CaCl₂ |

### Test de filtration statique

La formulation de boue A (BAROID) est filtrée selon la procédure API (norme API 13) à une température de 80 °C et sous une différence de pression de 3,5 MPa. Après filtration de 300 ml de boue pendant une heure, la cellule est dépressurisée, vidée de la boue, rincée avec 200 ml de solution de traitement, puis remplie avec 300 ml de solution de traitement. Le cake à l'intérieur de la cellule est laissé en contact avec la solution de traitement pendant un temps variable à 1 MPa et à 80 °C ("soaking time"), avant de commencer une nouvelle filtration.

### Test de compatibilité

Dans l'optique d'éviter un endommagement additionnel de la formation à la paroi, il convient de contrôler la formation ou non d'émulsions *in situ* en choisissant un fluide de traitement compatible avec les fluides de réservoir (saumure et huile) et le filtrat de la boue.

Dans ce test, on met en contact la saumure (NaCI, 20 g/l) et une phase organique composée de l'huile de réservoir, du filtrat de la boue et du désémulsionnant.

Le filtrat est reconstitué à partir de l'huile de base et des tensioactifs de la boue. On met en contact, à volume égal : un mélange composé de 80 ml de filtrat - 20 ml d'émulsion (3 ml de saumure NaCI 20 g/l dans 17 ml d'huile de réservoir) et 100 ml de produit de traitement. L'agitation est manuelle (1 minute) et l'émulsion est versée dans une fiole à décanter.

On décrit ci-après les résultats obtenus avec chacune des formulations testées.

### Exemple 1 :

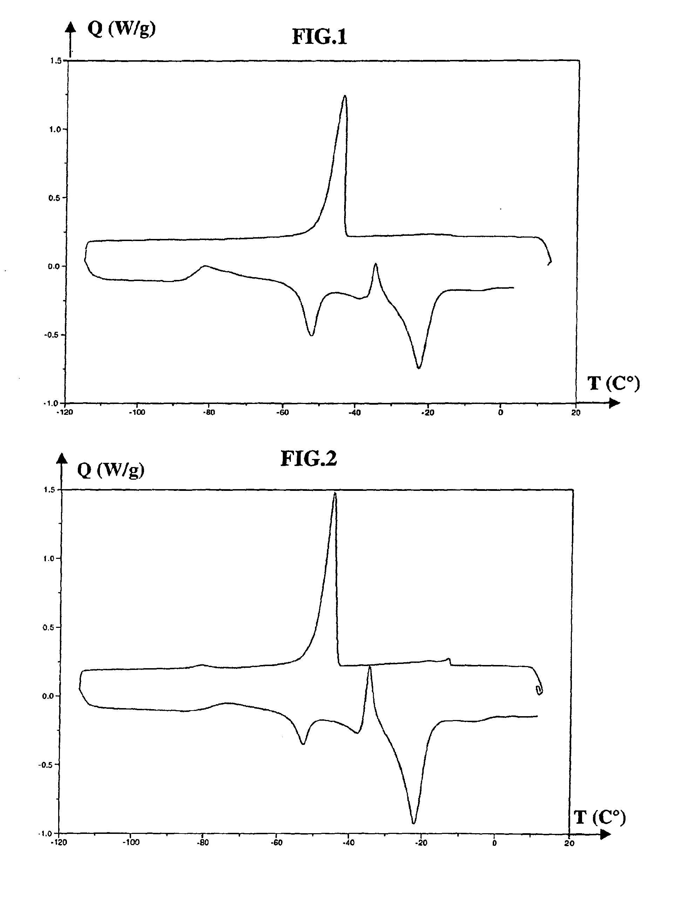

Le test de déstructuration en cristallisoir est effectué avec la Formulation 1. Le cassage de l'émulsion est total dès 24 heures de temps de contact, ce qui est matérialisé par l'apparition d'un pic d'eau libre vers -40 °C (cf. Figure 1, pour 24 heures, et Figure 2, pour une semaine).

### Exemple 2 :

### Tests en cristallisoir

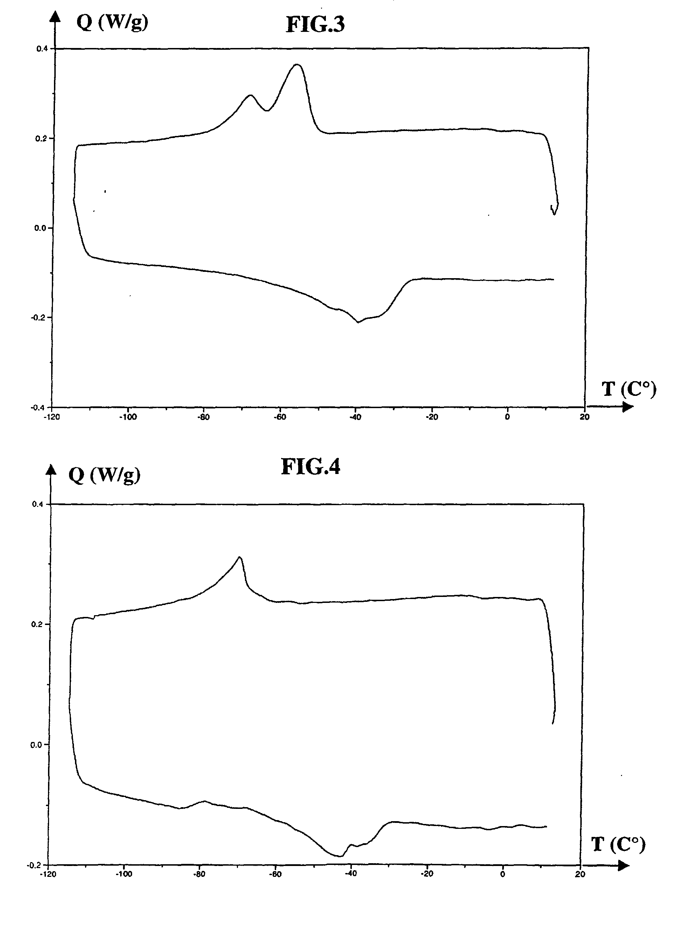

D'un point de vue qualitatif, à température ambiante, même à de faibles temps de contact (24 heures), on observe une évolution nette de la qualité de l'émulsion au sein du cake. Le pic d'eau émulsionnée initial (-80 °C) a disparu. On observe deux pics conjoints à-69 °C et -57 °C. Cette augmentation de température signale une taille de gouttelettes supérieure, il y a eu coalescence des gouttelettes au sein du cake. L'émulsion apparaît de plus clairement polydisperse (présence de deux tailles de gouttelettes) (cf. Figure 3). Après une semaine de temps de contact, le cake est nettement déstructuré (cf. Figure 4).

### Exemple 3 :

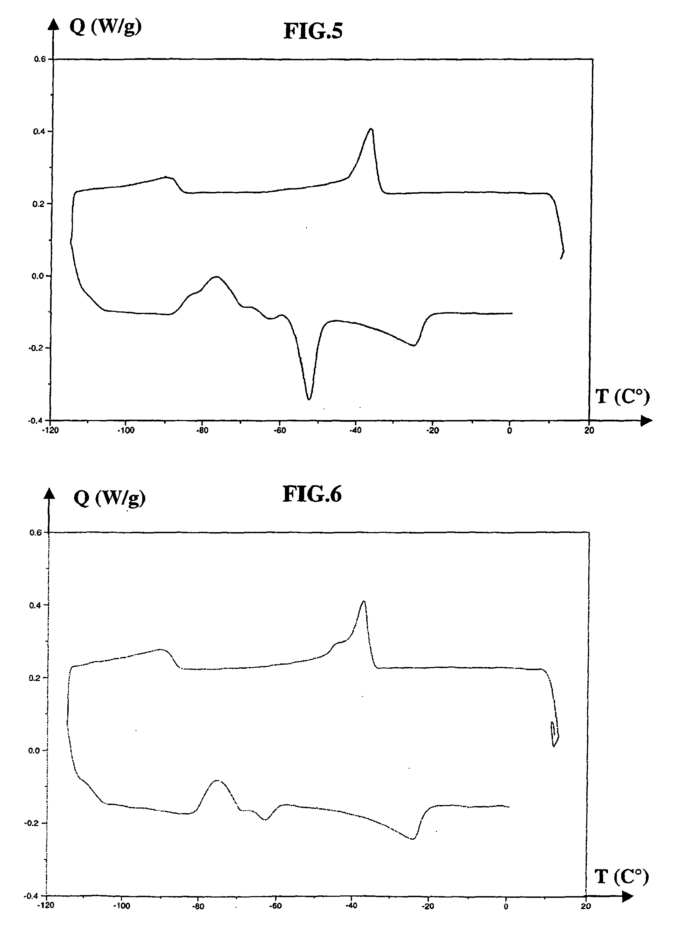

Comme la Formulation 2, la Formulation 3 permet d'obtenir un cassage très rapide de l'émulsion au sein du cake, observé grâce au test en cristallisoir (24 heures et une semaine) : le pic de l'eau émulsionnée s'est en effet déplacé vers -40 °C, indiquant la présence de très grosses gouttelettes susceptibles de coalescer pour former de l'eau libre (cf. Figure 5 et Figure 6).

### Exemple 4:

### Tests en cristallisoir :

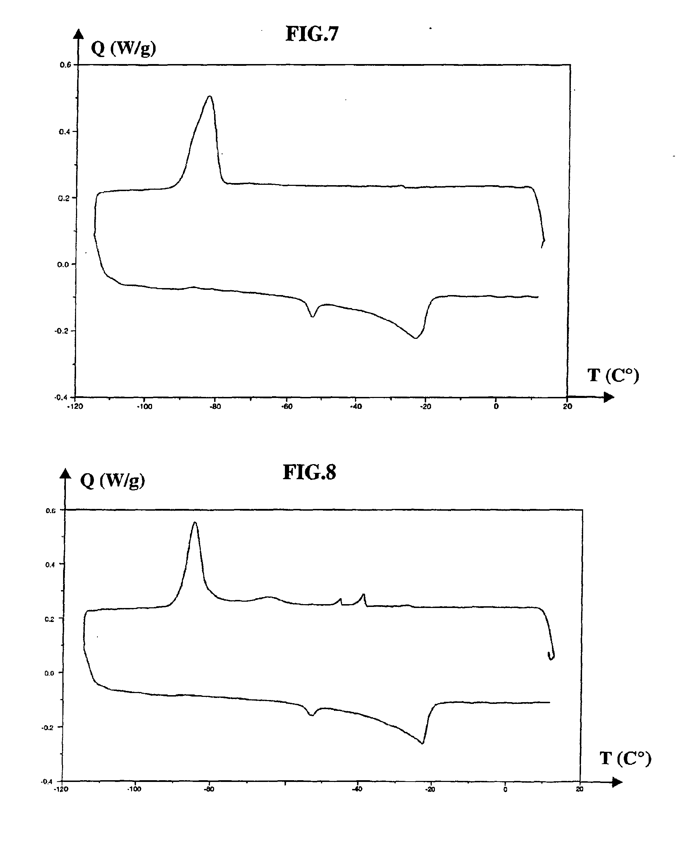

Un échantillon du cake traité au moyen de la Formulation 4 est analysé par la technique de DSC comme précédemment. Le cassage de l'émulsion au sein du cake est confirmé par le cycle de refroidissement - chauffage obtenu en DSC. Pour un temps de contact de 24 h, on observe un renflement sur le pic d'eau émulsionnée: l'émulsion devient polydisperse (cf. Figure 7). Pour un temps de contact d'une semaine, on observe différents pics sur la courbe de cristallisation : l'eau émulsionnée sous forme de très fines gouttelettes est matérialisée par le pic à -80 °C, tandis qu'un renflement aux alentours de -60 °C indique la présence de fines gouttelettes en train de coalescer. Les deux petits pics pointus révèlent respectivement la présence de grosses gouttelettes et d'eau libre issues du cassage de l'émulsion. (cf. Figure 8).

### Tests de filtration statique :

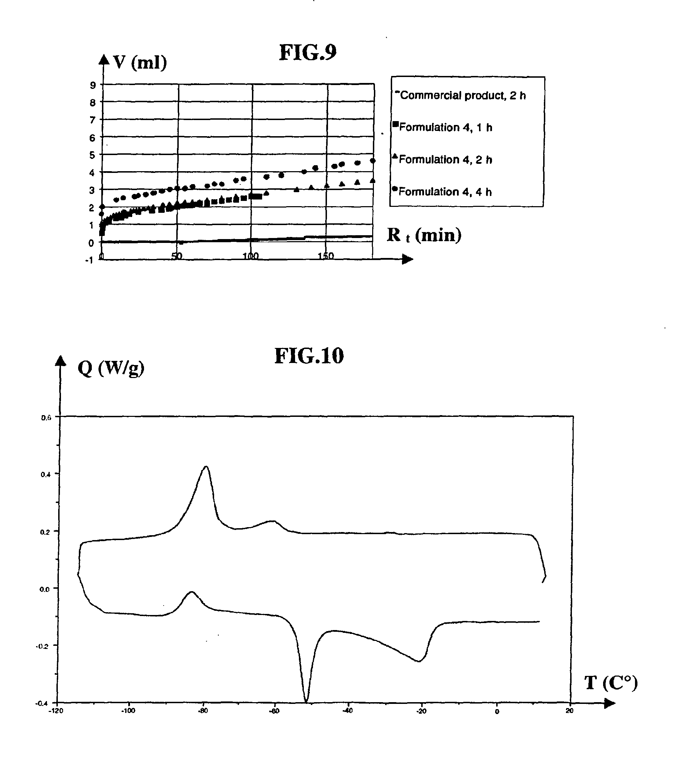

Sur la Figure 9, on a porté le volume V en ml en fonction de la racine carrée du temps en minutes Rₜ) pour différents temps de contact avant filtration (1 h, 2 h et 4 h).

### Exemple comparatif 5

Le même type d'essai a été mené avec un produit de traitement contenant 6 % en poids du produit commercial DM1® (fourni par la société BAROID) en solution dans 64 % en poids d'huile de base HDF 2000® et 30 % en poids d'un solvant aromatique PARAGON®. Les résultats matérialisés sur la Figure 9 par la courbe de drainage en fonction du temps montrent une pente de filtration plus faible que pour les formulations de l'invention.

La Figure 10 présente la caractérisation en DSC du cake traité en filtration statique après un temps de contact de 2 heures : la déstructuration du cake est révélée par la coalescence des gouttelettes au sein de l'émulsion (déplacement du pic de cristallisation vers les températures supérieures).

### Test de compatibilité :

La formulation de boue et la solution de traitement sont mises en contact à volume égal selon le protocole cité précédemment. On observe un cassage immédiat de l'émulsion formée.

Dans une seconde série d'exemples, on a utilisé les formulations décrites ci-dessous.

### Formulations 5 et 6 :

A partir de la Formulation 4, on a mis au point les Formulations 5 et 6 comme suit :
- Mélange de base: 10 g/l de fluide conforme à la Formulation 4 dans de l'huile minérale HDF 2000®.
- Sous agitation 15 min au Silverson à 6 000 tr/min, on ajoute 5 % en poids de Pliolite DF 01®. Le mélange est laissé à mûrir pendant 16 h à 80 °C.
- On agite 15 min au Silverson à 6 000 tr/min.
- Puis, sous agitation 5 min au Silverson, on ajoute 0,5 % en poids de Disperbyk 108®.
- Pour obtenir une masse volumique de 1,12, on additionne 600 g/l de carbonate de calcium sous deux granulométries différentes :
   - dans le premier cas, on utilise le carbonate de calcium Mikhart 5® (ayant une granulométrie correspondant à un D₅₀ de 5 µm) ; et
   - dans le second, un mélange 50/50 des deux carbonates de calcium (Mikhart 5® et Mikhart 40®), ayant des granulométries correspondant respectivement à des D₅₀ de 5 µm et 40 µm).
- Dans les deux cas, on agite 15 min au Silverson. On laisse mûrir 16 heures à 80 °C ; enfin, on homogénéise 5 min au Silverson.

Les mélanges ainsi obtenus présentent les propriétés indiquées au tableau suivant.

**Tableau 2**

| | Mikhart 5 | | Mikhart 5 et 40 (50/50) | |
|---|---|---|---|---|
| | 25 °C | 50 °C | 25 °C | 50 °C |
| Gel 0/10 (Pa) | 5,76/6,24 | 6,24/6,72 | 4,8/5,28 | 4,8/5,28 |
| Gel 1 h (Pa) | - | 7,2 | - | - |
| V mPa.s) | 34 | 23 | 21 | 18 |
| VP (mPa.s) | 28 | 17 | 18 | 15 |
| YV (Pa) | 5,76 | 5,76 | 2,88 | 2,88 |

- Le Gel 0, exprimé en Pa est obtenu à un gradient de cisaillement de 5 s⁻¹ après 30 secondes de cisaillement à 1020 s⁻¹ et 10 secondes de repos. Le Gel 10, exprimé en Pa, est obtenu après la mesure du Gel 0 à un cisaillement de 5 s⁻¹ après 10 minutes de repos ; la différence des deux valeurs caractérise la thixotropie du mélange. Le Gel 1 h, exprimé en Pa, est obtenu après la mesure du Gel 0 à un cisaillement de 5 s⁻¹, après 1 heure de repos.
- La viscosité apparente (VA), exprimée en mPa.s, est la viscosité qui correspond à un cisaillement de 1020 s⁻¹. La viscosité plastique (VP), exprimée en mPa.s est la pente de la courbe qui représente la tension de cisaillement en fonction du taux de cisaillement. La valeur de seuil (YV, de l'anglais « yield value »), exprimée en Pa est la tension limite de cisaillement ou force minimale pour provoquer l'écoulement.

### Exemple 6 : Tests sur les Formulations 5 et 6

### Filtration sur tranche de grès de Bérea :

On utilise une carotte constituée de grès de Bérea, de longueur 70 mm et de diamètre 32,7 mm.

Le milieu poreux (la carotte) est placé dans des conditions proches de celles du réservoir. On sature la carotte à la saumure NaCI / KCI, puis à l'huile, de façon à atteindre la saturation irréductible en eau, comme suit :
(a) Saturation de la roche à la saumure : la carotte est saturée dans un dessiccateur tirant sous vide, puis elle est placée sous 2 MPa de pression de confinement et parcourue par de la saumure (40 g/l NaCl, 5 g/l KCl) à 10 cm³/h pendant 48 h avec 1 MPa de pression de pores.
(b) Mesure de la perméabilité à la saumure : la carotte est traversée par de la saumure à différents débits (Q : 300, 200, 100 cm³/h) et on mesure la différence de pression (ΔP) entre les extrémités du milieu poreux. La pente de la droite Q = f(ΔP) permet de calculer la perméabilité de la roche à la saumure Kw (en milliDarcy).
(c) Mesure de la perméabilité à l'huile : injection d'huile SOLTROL 130® (huile raffinée de viscosité 0,7 mPa.s à 80 °C) à 10 cm³/h pendant 24 h, puis augmentation progressive du débit de 100 cm³/h à 500 cm³/h. Le volume d'eau recueilli permet de calculer le taux de saturation de l'huile (So) et de l'eau (Sw).
(d) La carotte est ensuite traversée par de l'huile à différents débits (300, 200, 100 cm³/h) et on mesure la pression différentielle ΔP. La pente de la droite Q = f(ΔP) permet de calculer la perméabilité de la roche à l'huile Ko (en milliDarcy).

La boue telle que décrite précédemment est mise en contact sous un cisaillement de 600 tr/min avec un ΔP de 3,5 MPa, à 28°C. La filtration est arrêtée quand 2/3 du milieu poreux est envahi par le filtrat. Le produit de traitement (Formulation 4 ou Formulation alourdie 6) est mis au contact pendant 16 heures sans ΔP, puis la filtration avec le produit de traitement est réalisée avec le même cisaillement avec un ΔP de 1 MPa et à 28°C.

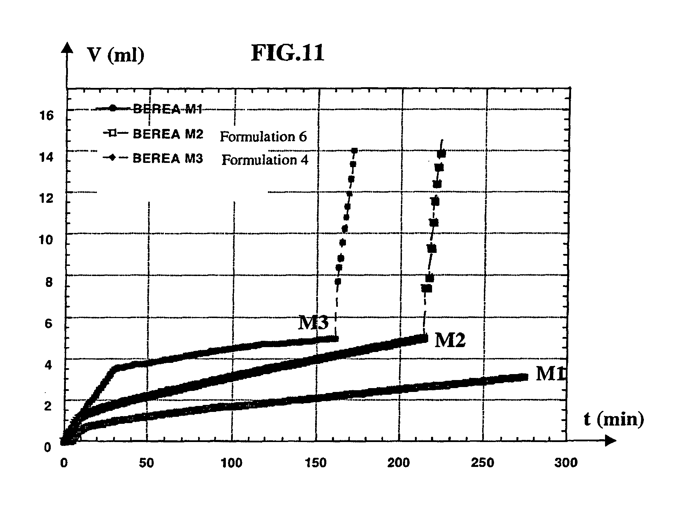

Les résultats sont présentés sur la Figure 11, sur laquelle les courbes correspondent respectivement aux essais réalisés sans produit de traitement puis avec la Formulation 4 et la Formulation alourdie 6. La rupture de pente de filtration en M2 et M3 indique la déstructuration du cake de filtration. Que la formulation soit alourdie ou non, les pentes de filtration sont tout à fait similaires, ce qui indique le cassage du cake par la formulation testée.

### Caractérisation de la déstructuration par cryomicroscopie (microscopie électronique à balayage)

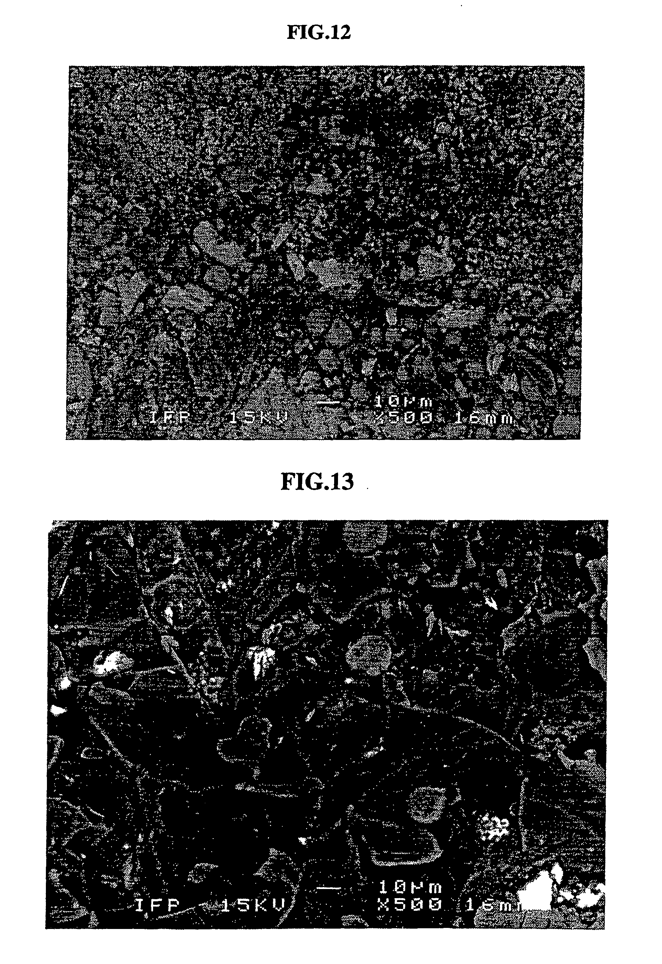

La technique utilisée est décrite dans l'article de L. Loeber (Revue IFP, 51, n°6, 1996). Des échantillons de roche envahie par la boue, puis mis en contact avec les produits de traitement définis précédemment (Formulations 5 et 6) sont coupés puis congelés dans de l'azote à -210 °C et transférés sous vide sous un microscope électronique à balayage (Oxford CT 1500). Les photos présentées aux Figures 12 et 13 mettent en évidence que, alourdie ou non, la formulation de traitement induit la coalescence de l'émulsion et la déstructuration du cake.

La Figure 12 correspond à la Formulation 5 (alourdie) et la Figure 13 à la Formulation 4 (non alourdie)

## Revendications

1. Formulation désémulsionnante organique **caractérisée en ce qu'**elle comprend :
à titre d'agent désémulsionnant, au moins un constituant choisi parmi les compositions amphiphiles non-ioniques obtenues par réaction d'au moins une huile végétale polymérisée, sur au moins un aminoalcool, présent en une proportion de 0,5 à 100 % en poids de matière active pure ;
- au moins un agent mouillant choisi parmi les tensioactifs anioniques présent en une proportion allant jusqu'à 50 % en poids de tensioactif pur;
- et au moins un solvant présent en une proportion allant jusqu'à 99,5 % en poids;
l'ensemble étant en mélange dans une base organique et ayant une concentration en matières actives pures de 0,01 à 50 g, de préférence de 0,1 à 10 g, pour 100 ml de ladite base organique.

2. Formulation selon la revendication 1 **caractérisée en ce qu'**elle comprend, en outre, à titre d'agent désémulsionnant, des esters alkyliques d'acides gras dérivés d'huiles naturelles, végétales ou animales.

3. Formulation selon l'une des revendications 1 ou 2 **caractérisée en ce que** ledit agent désémulsionnant comprend au moins une composition amphiphile non-ionique obtenue par réaction d'huile de lin polymérisée sur de la diéthanolamine.

4. Formulation selon l'une des revendications 2 à 3 **caractérisée en ce que** ledit agent désémulsionnant comprend au moins un mélange d'esters méthyliques d'huile de colza.

5. Formulation selon l'une des revendications 1 à 4 **caractérisée en ce que** ledit agent mouillant est un dialkyl sulfosuccinate de sodium.

6. Formulation selon l'une des revendications 1 à 5 **caractérisée en ce que** ledit solvant est choisi parmi les coupes pétrolières, les alcools et les mélanges hydro-alcooliques, les esters alkyliques d'acides carboxyliques à longues chaînes et les compositions d'esters alkyliques d'acides gras dérivés d'huiles végétales.

7. Formulation selon l'une des revendications 1 à 6 **caractérisée en ce que** ledit solvant est un mélange d'esters méthyliques de l'huile de colza.

8. Formulation selon l'une des revendications 1 à 7 **caractérisée en ce que** ladite base organique est une huile minérale ou une huile d'origine végétale.

9. Formulation selon la revendication 8 **caractérisée en ce que** ladite base organique est non-polluante.

10. Formulation selon la revendication 8 ou 9 **caractérisée en ce que** ladite huile d'origine végétale est un mélange d'esters méthyliques d'huile de colza.

11. Formulation selon l'une des revendications 1 à 10 **caractérisée en ce que**, la formulation étant utilisée pour le traitement de puits forés en boue à l'huile, la base organique de ladite formulation est une huile identique à celle de la boue.

12. Formulation selon l'une des revendications 1 à 11 **caractérisée en ce qu'**elle comprend en outre de 1 à 10 % en poids par rapport à la base organique d'au moins un agent viscosifiant pour milieu organique, et une quantité déterminée selon la masse volumique requise pour le fluide d'au moins un agent alourdissant.

13. Formulation selon la revendication 12 **caractérisée en ce que** l'agent viscosifiant est choisi parmi les résines acryliques organosolubles plus ou moins réticulées.

14. Formulation selon la revendication 12 ou 13 **caractérisée en ce que** ledit agent alourdissant choisi parmi les carbonates de calcium de différentes granulométries.

15. Formulation selon l'une des revendications 12 à 14 **caractérisée en ce qu'**elle comprend en outre jusqu'à 5 %, et de préférence jusqu'à 2 %, par rapport à la base organique d'au moins un agent dispersant.

16. Formulation selon la revendication 15 **caractérisée en ce que** ledit agent dispersant est choisi parmi les esters d'acides carboxyliques hydroxy fonctionnalisés dont les groupes fonctionnels ont de affinités avec les pigments utilisés pour la formulation des peintures.

17. Utilisation d'une formulation désémulsionnante en base organique selon l'une des revendications 1 à 16 dans le traitement d'un puits foré en boue à l'huile.

18. Utilisation d'une formulation selon l'une des revendications 1 à 16 pour toute phase de puits nécessitant un fluide de même densité que la boue utilisée pour forer le puits.

## Claims

1. An organic emulsion-breaking formulation, **characterized in that** it comprises:
• as the emulsion-breaking agent, at least one constituent selected from non-ionic amphiphilic compositions obtained by reacting at least one polymerized vegetable oil with at least one amino-alcohol, present in a proportion of 0.5% to 100% by weight of pure surfactant;
• at least one wetting agent selected from anionic surfactants present in a proportion of up to 50% by weight of pure surfactant;;
• and at least one solvent present in a proportion of up to 99.5% by weight;
the assembly being as a mixture in an organic base having a concentration of pure active matter of 0,01 to 50 g, preferably 0,1 to 10g per 100 ml of said organic base.

2. A formulation according to claim 1, **characterized in that** it comprises, also, as the emulsion-breaking agent, alkyl esters of fatty acids derived from natural, vegetable or animal oils.

3. A formulation according to claim 1 or claim 2, **characterized in that** said emulsion-breaking agent comprises at least one non-ionic amphiphilic composition obtained by reacting polymerized linseed oil with diethanolamine.

4. A formulation according to any one of claims 2 to 3, **characterized in that** said emulsion-breaking agent comprises at least a mixture of methyl esters of rapeseed oil.

5. A formulation according to any one of claims 1 to 4, **characterized in that** said wetting agent is a sodium dialkyl sulfosuccinate.

6. A formulation according to any one of claims 1 to 5, **characterized in that** said solvent is selected from petroleum cuts, alcohols and hydroalcoholic mixtures, alkyl esters of long chain carboxylic acids and compositions of alkyl esters of fatty acids derived from vegetable oils.

7. A formula according to any one of claims 1 to 6, **characterized in that** said solvent is a mixture of methyl esters of rapeseed oil.

8. A formula according to any one of claims 1. to 7, **characterized in that** said organic base is a mineral oil or an oil of vegetable origin.

9. A formulation according to claim 8, **characterized in that** said organic base is nonpolluting.

10. A formulation according to claim 8 or claim 9, **characterized in that** said oil of vegetable origin is a mixture of methyl esters of rapeseed oil.

11. A formulation according to any one of claims 1 to 10, **characterized in that**, when the formulation is used to treat well bores drilled in oil-base mud, the organic base of said formulation is an oil identical to that of the mud.

12. A formulation according to any one of claims 1 to 11, **characterized in that** it further comprises 1% to 10% by weight with respect to the organic base of at least one viscosifying agent for the organic medium and a quantity, determined according to the specific density required for the fluid, of at least one weighting agent.

13. A formulation according to claim 12, **characterized in that** the viscosifying agent is selected from organosoluble acrylic resins that are cross-linked to a greater or lesser extent.

14. A formulation according to claim 12 or claim 13, **characterized in that** said weighting agent is selected from calcium carbonates of different grain sizes.

15. A formulation according to any one of claims 12 to 14, **characterized in that** it further comprises up to 5%, preferably up to 2% with respect to the organic base, of at least one dispersing agent.

16. A formulation according to claim 15, **characterized in that** said dispersing agent is selected from hydroxy-functionalized carboxylic acid esters the functional groups of which have affinities with the pigments used in paint formulations.

17. Use of an emulsion-breaking formulation in an organic base according to any one of claims 1 to 16, for the treatment of a well bore drilled in an oil-base mud.

18. The use of an emulsion-breaking formulation in an organic base according to any one of claims 12 to 16 in any well phase that requires a fluid having the same density as the mud used to drill the well bore.

## Patentansprüche

1. Demulgierende organische Formulierung, **dadurch gekennzeichnet, dass** sie umfasst:
als demulgierendes Mittel mindestens einen Bestandteil, ausgewählt aus den nichtionischen amphiphilen Zusammensetzungen, die durch Umsetzen mindestens eines polymerisierten pflanzlichen Öls mit mindestens einem Aminoalkohol, erhalten werden kann, der in einem Anteil von 0,5 bis 100 Gew.-% reinem Aktivstoff vorhanden ist;
- mindestens ein Benetzungsmittel, ausgewählt aus den anionischen oberflächenaktiven Stoffen, das In einem Anteil von bis zu 50 Gew.-% reinem oberflächenaktiven Stoff vorhanden ist;
- und mindestens ein Lösemittel, das in einem Anteil von bis zu 99,5 Gew.-% vorhanden ist;
wobei die Gesamtheit als Gemisch in einer organischen Base vorhanden ist und eine Konzentration an reinen Aktivstoffen von 0,01 bis 50 g, bevorzugt von 0,1 bis 10 g je 100 ml organischer Base aufweist.

2. Formulierung nach Anspruch 1, **dadurch gekennzeichnet, dass** sie ferner als demulgierendes Mittel Fettsäurealkylester umfasst, die von natürlichen, pflanzlichen oder tierischen Ölen abgeleitet sind.

3. Formulierung nach einem der Ansprüche 1 oder 2, **dadurch gekennzeichnet, dass** das demulgierende Mittel mindestens eine nichtionische amphiphile Zusammensetzung umfasst, die durch Umsetzen von pvlymerisiertem Leinöl mit Diethanolamin erhalten wurde.

4. Formulierung nach einem der Ansprüche 2 bis 3, **dadurch gekennzeichnet, dass** das demulgierende Mittel mindestens ein Gemisch aus Rapsölmethylestern umfasst.

5. Formulierung nach einem der Ansprüche 1 bis 4, **dadurch gekennzeichnet, dass** das Benetzungsmittel ein Natriumdialkylsulfosuccinat ist.

6. Formulierung nach einem der Ansprüche 1 bis 5, **dadurch gekennzeichnet, dass** das Lösemittel ausgewählt ist aus Erdolschnitten, Alkoholen und hydroalkoholischen Gemischen, Alkylestern langkettiger Carbonsäuren und Fettsäurealkylesterzusammensetzungen, die von pflanzlichen Ölen abgeleitet sind.

7. Formulierung nach einem der Ansprüche 1 bis 6, **dadurch gekennzeichnet, dass** das Lösemittel ein Gemisch aus Rapsölmethylestern ist.

8. Formulierung nach einem der Ansprüche 1 bis 7, **dadurch gekennzeichnet, dass** die organische Base ein mineralisches Öl oder ein Öl pflanzlichen Ursprungs ist.

9. Formulierung nach Anspruch 8, **dadurch gekennzeichnet, dass** die organische Base umweltfreundlich ist.

10. Formulierung nach Anspruch 8 oder 9, **dadurch gekennzeichnet, dass** das Öl pflanzlichen Ursprungs ein Gemisch aus Rapsölmethylestern ist.

11. Formulierung nach einem der Ansprüche 1 bis 10, **dadurch gekennzeichnet, dass** die Formulierung für die Behandlung von mit Öl enthaltendem Bohrschlamm gebohrten Ölbohrlöchern verwendet wird, wobei die organische Base der Formulierung ein Öl ist, das mit dem des Schlamms identisch ist.

12. Formulierung nach einem der Ansprüche 1 bis 11, **dadurch gekennzeichnet, dass** sie ferner 1 bis 10Gew.-%, bezogen auf die organische Base, mindestens eines Verdickungsmittels für das organische Medium und eine Menge mindestens eines Beschwerungsmittels umfasst, die gemäß der für das Fluid erforderlichen spezifischen Dichte bestimmt wurde.

13. Formulierung nach Ansprüche 12, **dadurch gekennzeichnet, dass** das Verdickungsmittel aus den mehr oder weniger vernetzten, in organischen Lösemittel löslichen Acrylharzen ausgewählt ist.

14. Formulierung nach Anspruch 12 oder 13, **dadurch gekennzeichnet, dass** das Beschwerungsmittel aus den Calciumcarbonaten mit unterschiedlicher Korngrößenverteilung ausgewählt ist.

15. Formulierung nach einem der Ansprüche 12 bis 14, **dadurch gekennzeichnet, dass** sie ferner bis zu 5 % und bevorzugt bis zu 2 %, bezogen auf die organische Base, mindestens eines Dispersionsmittels umfasst.

16. Formulierung nach Anspruch 15, **dadurch gekennzeichnet, dass** das Dispersionsmittel ausgewählt ist aus den hydroxy-funktionalisierten Carbonsäureestern, deren funktionelle Gruppen Affinitäten mit den Pigmenten aufweisen, die für Farbenformulierungen verwendet werden.

17. Verwendung einer demulgierenden Formulierung in organischer Base nach einem der Ansprüche 1 bis 16 bei der Behandlung eines mit Öl enthaltendem Bohrschlamm gebohrten Ölbohrlochs.

18. Verwendung einer Formulierung nach einem der Ansprüche 12 bis 16 für jede Ölbohrlochphase, die ein Fluid erfordert, das die gleiche Dichte wie der Schlamm aufweist, der für das Bohren des Ölbohrlochs verwendet wird.
